# FASCICULE DE BREVET EUROPEEN

(11) **EP 0 683 088 B1**
(45) Date de publication et mention de la délivrance du brevet: **16.07.1997**
(21) Numéro de dépôt: 95401102.9
(22) Date de dépôt: 12.05.1995
(51) Int. Cl.: B62D 21/11, B60G 25/00, B60G 7/02, B60G 3/20

(54) **Train avant à doubles triangles tranversaux, et véhicule automobile équipé d'un tel train**
Vorderradaufhängung mit zwei Quer-Dreieckslenkern und ein mit einer solchen Radaufhängung ausgerüstetes Kraftfahrzeug
Front wheel suspension assembly with double transversal triangles and motor vehicle equipped with such an assembly

(30) Priorité: 19.05.1994 FR 9406110
(43) Date de publication de la demande: 22.11.1995
(73) Titulaire: AUTOMOBILES PEUGEOT, 75116 Paris (FR); AUTOMOBILES CITROEN, 92200 Neuilly-sur-Seine (FR)
(72) Inventeur: Froumajou, Armand, F-95110 Sannois (FR)
(74) Mandataire: Gendraud, Pierre

(56) Documents cités:
- EP-A- 0 287 278
- EP-A- 0 436 407
- FR-A- 1 051 204
- FR-A- 1 188 259
- FR-A- 1 226 280
- GB-A- 1 433 488
- GB-A- 1 499 696
- REIMPELL J. 'FAHRWERKTECHNIK: RADAUFHANGUNGEN' 1988 , VOGEL , WÜRZBURG,DE * page 227; figure 5.2.25 *
- PATENT ABSTRACTS OF JAPAN vol. 11 no. 71 (M-567) ,4 Mars 1987 & JP-A-61 226309 (MAZDA) 8 Octobre 1986,

## Description

L'invention a pour objet un train avant à doubles triangles transversaux ainsi qu'un véhicule automobile équipé d'un tel train. Elle trouve son application dans l'industrie automobile.

Il est connu, dans l'art antérieur, un train avant pour vehicule automobile du genre dans lequel les brancards de structure comportent une partie arrière basse et une partie avant haute, plus écartée de l'axe du véhicule que la partie arrière au niveau du groupe moto-propulseur transversal et dans lequel chaque roue est portée par un support de roue ou pivot comportant deux rotules définissant un axe de pivotement de la roue, une de ces rotules étant reliée à un sommet d'un premier triangle dit inférieur et l'autre à un sommet d'un deuxième triangle dit supérieur, dont l'axe d'articulation longitudinal est situé à l'intérieur de l'espace défini par lesdits brancards de structure et leur projection au sol, ces deux triangles étant reliés chacun à la caisse par une articulation à axe sensiblement longitudinal, selon leur côté opposé à la rotule, de façon à permettre et guider le débattement vertical de la roue.

Un train avant, bien connu de l'art antérieur, est décrit par exemple dans le brevet FR-A-1.226.280. Il a fait l'objet de nombreuses applications, mais il a été remplacé dans les véhicules à traction avant et groupe moto-propulseur disposé transversalement par des trains de type Mac Pherson ou pseudo Mac Pherson. En effet, on ne dispose pas dans ces véhicules, entre l'axe du pivot situé dans la roue et le groupe moto-propulseur, d'un espace suffisant pour implanter le triangle supérieur et ses supports sur la structure.

Il a été cependant proposé pour de tels véhicules des trains du type décrit ci-dessus dans lesquels le triangle supérieur est placé très haut, par exemple au dessus de la roue elle-même. Une telle disposition présente un certain nombre d'inconvénients exposés ci-dessous.

Le triangle supérieur doit être articulé dans une partie haute de la structure de caisse, ce qui impose un montage direct sur la caisse et une perte de précision corrélative dans la géométrie du train. De ce fait, le pivot doit comporter un prolongement analogue à une corne pour rejoindre la rotule supérieure, ce qui entraîne des suppléments de masse et de prix, alors que le triangle a une dimension transversale limitée.

En outre, l'élément porteur ne peut être rattaché qu'au triangle inférieur, ce qui entraîne des problèmes liés au passage de la transmission vers la roue.

Enfin, la présence près de la roue de la corne de pivot et de l'élément porteur augmente l'encombrement transversal.

L'invention propose donc un train avant à doubles triangles transversaux qui remédie aux inconvénients cités ci-dessus, tout en conservant un pivot compact et en permettant l'articulation directe des deux triangles sur un berceau qui peut être fixé à la caisse par des supports élastiques filtrants.

A cet effet, et selon une première caractéristique de l'invention, le triangle supérieur est constitué d'un bras transversal situé sensiblement dans le plan vertical de l'essieu et d'un prolongement sensiblement perpendiculaire au bras et s'étendant vers l'arrière selon l'axe d'articulation longitudinal du triangle, disposé de telle sorte que ledit bras transversal passe et se débat sous le brancard de structure correspondant.

Selon une autre caractéristique importante de l'invention, les deux triangles sont articulés à un berceau fixé à la caisse du véhicule sous les brancards par des supports élastiques.

Le berceau est constitué d'une structure supérieure sur laquelle sont articulés les triangles supérieurs et d'une structure inférieure sur laquelle sont articulés les triangles inférieurs.

Selon une forme de réalisation préférée de l'invention, la structure supérieure du berceau comporte une traverse en U et la structure inférieure une traverse et deux longeronnets, les traverses supérieure et inférieure étant soudées entre elles au centre du véhicule et fixées entre elles à leurs extrémités par l'intermédiaire de deux colonnes verticales.

En outre, chaque colonne verticale peut comporter un prolongement s'étendant vers l'extérieur et servant de logement à un support élastique avant situé à l'intérieur du L constitué par le bras et son prolongement et chaque longeronnet peut comporter à l'arrière une extension servant de logement à un support élastique arrière.

Dans une disposition où les brancards de structure du véhicule automobile équipé du train décrit ci-dessus comportent chacun, symétriquement par rapport à l'axe du véhicule, une partie arrière basse et une partie avant haute et plus écartée de l'axe du véhicule que la partie arrière au niveau du groupe moto-propulseur transversal, l'articulation du bras supérieur est avantageusement disposée à proximité de la zone de raccordement des parties avant et arrière.

Un train avant selon l'invention est également remarquable en ce que les supports élastiques avant sont fixés à la structure du véhicule sous le brancard vers l'avant de la zone de raccordement et les supports élastiques arrière sous le brancard à l'extrémité arrière de la zone de raccordement.

Enfin, l'axe de l'articulation de chaque triangle supérieur peut être sensiblement parallèle à la direction en plan de la zone de raccordement des parties avant et arrière du brancard correspondant.

L'invention sera mieux comprise à l'aide de la description qui va suivre, donnée à titre d'exemple non limitatif et faite en se référant aux dessins annexés, dans lesquels :
- la figure 1 est une coupe longitudinale d'un véhicule comportant un train avant suivant l'invention, coupe passant par l'axe du triangle supérieur ;
- la figure 2 est une coupe en plan passant par l'axe du même triangle ;
- la figure 3 est une coupe longitudinale locale passant par le brancard de structure ;
- la figure 4 est une coupe longitudinale selon l'axe XX' du véhicule ;
- la figure 5 est, pour la partie basse une vue en plan, pour la partie haute une coupe du berceau à mi-hauteur ; et
- la figure 6 est une demi vue de face avec coupe partielle transversale à droite de la ligne L.

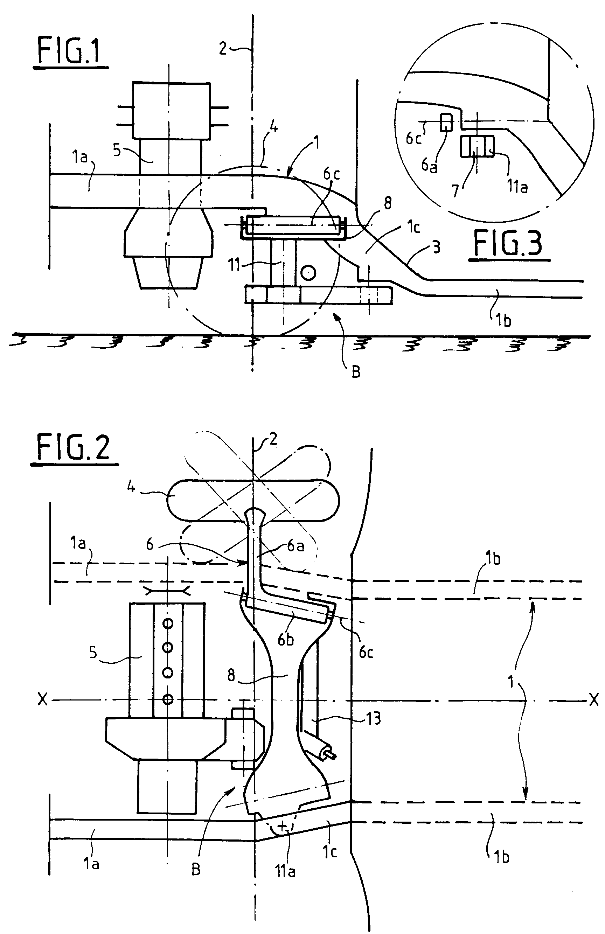

La structure du véhicule comprend (Figures 1 et 2) deux brancards 1 symétriques l'un de l'autre par rapport au plan vertical et longitudinal XX' du véhicule. Chaque brancard 1 comporte une partie avant 1a et une partie arrière 1b raccordées par une partie intermédiaire 1c. La partie avant 1a s'étend à peu près horizontalement depuis l'avant du véhicule jusqu'au plan vertical 2 de l'essieu avant où commence la zone de raccordement 1c avec la partie arrière 1b. Cette dernière s'étend à peu près horizontalement vers l'arrière sous le plancher 3 du véhicule et est disposée plus bas que la partie avant 1a et plus près du plan de symétrie XX'.

On voit (Figure 2) que le brancard 1 est contigu extérieurement au volume engendré par le braquage de la roue 4 et que sa forme particulière permet notamment l'implantation du groupe moto-propulseur 5 en travers. La forme du brancard 1 permet également, de façon connue, un braquage plus grand de la roue située à l'intérieur du virage.

Le triangle supérieur 6, généralement en acier forgé, comporte un bras 6a s'étendant transversalement depuis l'extrémité avant d'un prolongement 6b en forme de bobine. Ce prolongement 6b s'étend longitudinalement vers l'arrière et est muni de moyens assurant son articulation autour d'un axe longitudinal 6c disposé à l'intérieur de l'espace défini par les brancards 1 et leur projection au sol au voisinage de la zone intermédiaire 1c. Le bras 6a et le prolongement 6b constituent sensiblement un L. La base 6b du L et son axe d'articulation 6c peuvent être inclinés en plan parallèlement à la projection horizontale de la zone de raccordement 1c pour des raisons d'implantation (Figure 2), le triangle supérieur 6 prend alors en quelque sorte la forme d'un boomerang. On notera que le prolongement 6b est disposé entièrement côté intérieur des brancards 1. L'axe d'articulation 6c peut également être incliné d'environ 1° vers l'avant par rapport à l'horizontale, afin d'obtenir de l'anti-cabrage naturel.

On voit alors que, grâce à sa forme et à la disposition de son axe d'articulation, le bras 6a peut passer et se débattre sous la partie avant 1a du brancard 1, juste en avant de la zone de raccordement 1c.

Cette forme et cette disposition permettent de donner au triangle supérieur 6 à la fois dans la direction transversale la longueur effective (bras 6a) nécessaire à l'obtention d'une bonne épure du train et dans l'autre direction une longueur suffisante (extension 6b) pour supporter les efforts longitudinaux de la roue, tant au freinage qu'en traction.

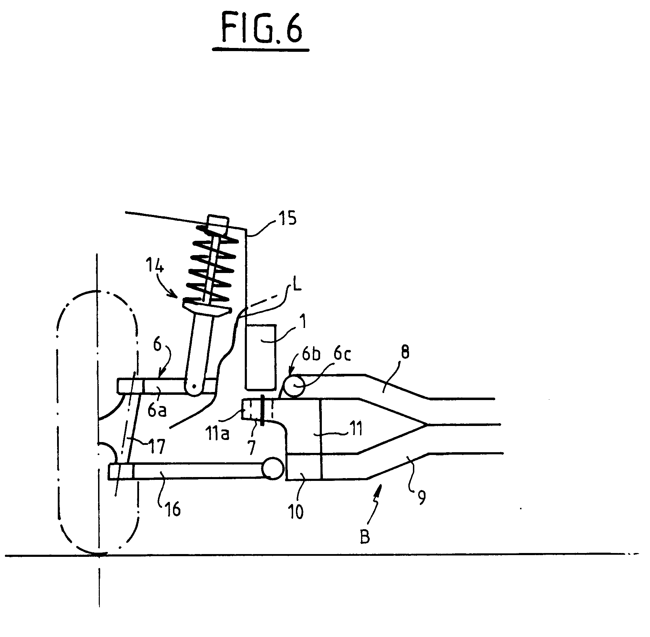

Le triangle inférieur 16 peut être réalisé selon les techniques bien connues pour les trains de type Mac Pherson. Chaque triangle (6 ou 16) comporte côté roue (Figure 6) une liaison à rotule avec le support de roue ou pivot 17 et peut être avantageusement articulé sur un berceau B lui-même fixé à la caisse par des supports élastiques assurant une filtration des vibrations.

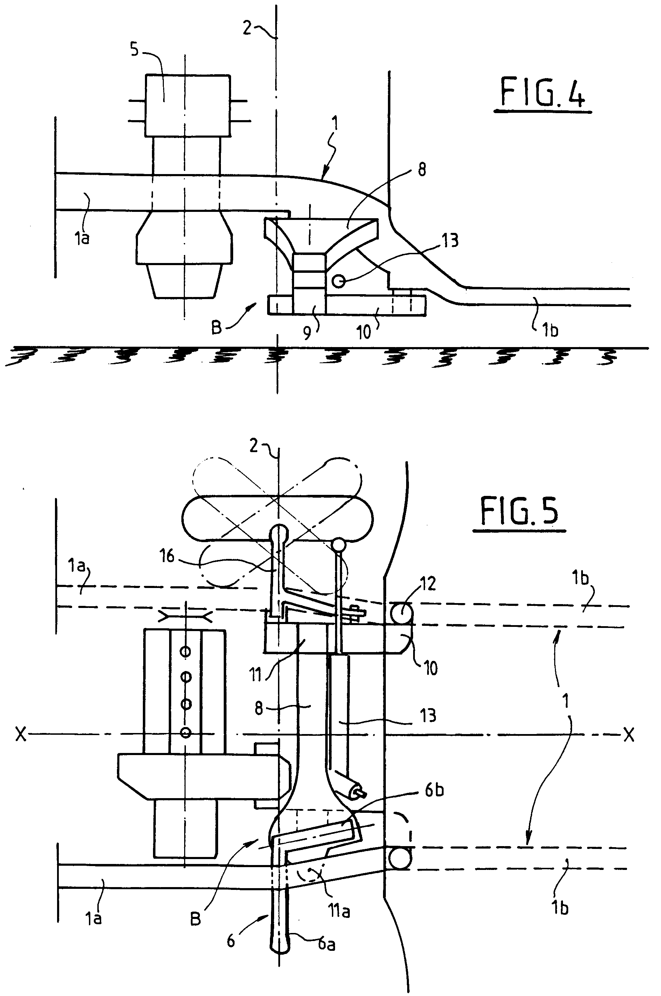

Le berceau B est constitué par un ensemble rigide, typiquement bien que non nécessairement en tôle préprotégée, emboutie et soudée au cordon, comportant une structure supérieure aux extrémités de laquelle sont articulés les triangles supérieurs 6 et une structure inférieure aux extrémités de laquelle sont articulés les triangles inférieurs 16 (Figures 4 et 6).

Comme on le voit dans la partie en coupe de la figure 6, la structure supérieure comporte une traverse supérieure 8 présentant une section en U. La structure inférieure est composée d'une traverse inférieure 9 et de deux longeronnets 10 soudés aux extrémités de cette traverse 9. La traverse supérieure 8 est cintrée vers le bas et la traverse inférieure 9 est cintrée vers le haut. Les traverses 8 et 9 sont soudées entre elles au centre du véhicule. Les structures inférieure et supérieure sont en outre fixées entre elles par l'intermédiaire de deux colonnes verticales 11 aux extrémités des traverses 8 et 9.

Chaque colonne verticale 11 comporte à sa partie supérieure un prolongement 11a s'étendant vers l'extérieur et servant de logement à un support ou cale de filtrage 7, lui-même boulonné à la structure du véhicule sous le brancard 1 vers l'avant de la zone de raccordement 1c. La section en U de la traverse supérieure 8 sert de chape à l'articulation 6c du triangle supérieur 6.

Les articulations du triangle inférieur 16 sont fixées sur la face externe du longeronnet 10 qui se prolonge vers l'arrière jusqu'à une extension servant de logement à un support ou cale élastique de filtrage 12, lui-même boulonné à la structure du véhicule (Figure 5) sous le brancard 1 vers l'extrémité arrière de la zone de raccordement 1c.

Comme on le voit à la figure 3 qui montre la position relative du bras 6a et de la cale de berceau 7, cette dernière est située en quelque sorte dans le "creux" du triangle 6, c'est-à-dire à l'intérieur du L constitué par le bras 6a et son prolongement 6b.

La forme et la disposition du triangle supérieur 6 permettent à la fois :
- son débattement sous le brancard, où seule la partie transversale 6a est concernée ;
- le passage du prolongement 6b derrière la partie descendante 6c du brancard ;
- la disposition de la cale 7 sous le brancard ;
- la réalisation d'un berceau dans lequel l'ensemble des traverses 8 et 9, des longeronnets 10 et des colonnes 11 constitue une construction parfaitement triangulée apte à supporter sans déformation les efforts en provenance des attaches des triangles.

Le berceau supporte également, ainsi qu'il est connu, une crémaillère de direction 13, qui peut être par exemple boulonnée à la traverse inférieure 9.

Le berceau décrit supporte donc l'ensemble des liaisons articulées du train avant, et est lui-même fixé à la structure du véhicule par quatre liaisons élastiques de filtrage (cales de filtrage avant 7, cale de filtrage arrière 12).

La fonction suspension et amortissement est assurée par un élément porteur 14 comprenant un ressort et un amortisseur concentriques, élément porteur prenant appui à la partie supérieure du passage de roue 15, et articulé à sa partie inférieure sur le triangle supérieur 6 (Figure 6).

## Revendications

1. Train avant pour véhicule automobile du genre dans lequel les brancards de structure (1) comportent une partie arrière basse (1b) et une partie avant haute (1a), plus écartée de l'axe du véhicule que la partie arrière au niveau du groupe moto-propulseur transversal (5) et dans lequel chaque roue (4) est portée par un support de roue ou pivot (17) comportant deux rotules définissant un axe de pivotement de la roue, une de ces rotules étant reliée à un sommet d'un premier triangle dit inférieur (16) et l'autre à un sommet d'un deuxième triangle dit supérieur (6) dont l'axe d'articulation longitudinal est situé à l'intérieur de l'espace défini par lesdits brancards de structure et leur projection au sol, ces deux triangles étant reliés chacun à la caisse par une articulation à axe sensiblement longitudinal, selon leur côté opposé à la rotule, de façon à permettre et guider le débattement vertical de la roue,
caractérisé en ce que le triangle supérieur (6) est constitué d'un bras transversal (6a) situé sensiblement dans le plan vertical (2) de l'essieu et d'un prolongement (6b) sensiblement perpendiculaire au bras (6a) et s'étendant vers l'arrière selon l'axe d'articulation longitudinal (6c) du triangle, disposé de telle sorte que ledit bras transversal (6a) passe et se débat sous le brancard de structure correspondant.

2. Train avant, selon la revendication 1, caractérisé en ce que les triangles de suspension (6,16) sont articulés à un berceau (B) fixé à la caisse du véhicule sous les brancards par des supports élastiques (7,12).

3. Train avant, selon la revendication 2, caractérisé en ce que le berceau (B) est constitué d'une structure supérieure (8) sur laquelle sont articulés les triangles supérieurs (6) et d'une structure inférieure (9,10) sur laquelle sont articulés les triangles inférieurs (16).

4. Train avant, selon la revendication 3, caractérisé en ce que la structure supérieure comporte une traverse en U (8) et la structure inférieure une traverse (9) et deux longeronnets (10), les traverses supérieure et inférieure étant soudées entre elles au centre du véhicule et fixées entre elles à leurs extrémités par l'intermédiaire de deux colonnes verticales (11).

5. Train avant, selon la revendication 4, caractérisé en ce que chaque colonne (11) comporte un prolongement (11a) s'étendant vers l'extérieur et servant de logement à un support élastique avant (7) situé à l'intérieur du L constitué par le bras (6a) et son prolongement (6b).

6. Train avant, selon la revendication 4 ou la revendication 5, caractérisé en ce que chaque longeronnet (10) comporte à l'arrière une extension (11a) servant de logement à un support élastique arrière (12).

7. Véhicule automobile, comportant un train avant conforme à l'une quelconque des revendications précédentes, caractérisé en ce que les supports élastiques avant (7) sont fixés à la structure du véhicule sous le brancard (1) vers l'avant de la zone de raccordement (1c) et les supports élastiques arrière (12) sous le brancard (1) à l'extrémité arrière de la zone de raccordement (1c).

8. Véhicule automobile, selon la revendication 7, caractérisé en ce que l'axe d'articulation du triangle supérieur (6) est sensiblement parallèle à la direction en plan de la zone de raccordement (1c).

## Claims

1. Front axle assembly for a motor vehicle, of the type in which the structural runners (1) have a lower rear portion (1b) and an upper front portion (1a), further away from the axis of the vehicle than the rear portion in the area of the transverse drive unit (5) and in which each wheel (4) is carried by a wheel support or pivot (17) comprising two ball joints defining an axis of pivoting for the wheel, one of these ball joints being connected to an apex of a first triangle known as the lower triangle (16) and the other to an apex of a second triangle known as the upper triangle (6), the longitudinal articulation axis of which is located inside the space defined by said structural runners and their projection on the ground, these two triangles each being connected to the body by an articulation with a substantially longitudinal axis, along their side opposite the ball joint, so as to allow and guide the vertical clearance of the wheel,
characterised in that the upper triangle (6) is constituted by a transverse arm (6a) located substantially in the vertical plane (2) of the axle and an extension (6b) substantially perpendicular to the arm (6a) and extending backwards along the longitudinal articulation axis (6c) of the triangle, arranged such that said transverse arm (6a) passes and has clearance under the corresponding structural runner.

2. Front axle assembly according to Claim 1, characterised in that the suspension triangles (6, 16) are articulated to a cradle (B) fixed to the body of the vehicle under the runners by resilient supports (7, 12).

3. Front axle assembly according to Claim 2, characterised in that the cradle (B) is constituted by an upper structure (8) to which the upper triangles (6) are articulated and of a lower structure (9, 10) to which the lower triangles (16) are articulated.

4. Front axle assembly according to Claim 3, characterised in that the upper structure comprises a U-shaped cross-member (8) and the lower structure a cross-member (9) and two side-members (10), the upper and lower cross-members being welded together to the centre of the vehicle and fixed together at their ends via two vertical columns (11).

5. Front axle assembly according to Claim 4, characterised in that each column (11) comprises an extension (11a) extending outwards and serving as a housing for a front resilient support (7) located inside the L constituted by the arm (6a) and its extension (6b).

6. Front axle assembly according to Claim 4 or Claim 5, characterised in that each side-member (10) comprises at the back an extension (11a) serving as a housing for a rear resilient support (12).

7. Motor vehicle, comprising a front axle assembly according to any one of the preceding claims, characterised in that the front resilient supports (7) are fixed to the structure of the vehicle under the runner (1) towards the front of the connection zone (1c) and the rear resilient supports (12) under the runner (1) at the rear extremity of the connection zone (1c).

8. Motor vehicle according to Claim 7, characterised in that the axis of articulation of the upper triangle (6) is substantially parallel to the plane direction of the connection zone (1c).

## Patentansprüche

1. Vorderradaufhängung für ein Kraftfahrzeug, in der der Art nach die tragenden Bodenlängsträger (1) einen hinteren, niederen Abschnitt (1b) und einen vorderen, hohen Abschnitt (1a) aufweisen, der auf der Höhe der querliegenden Motor-Antriebsgruppe (5) weiter von der Fahrzeugachse entfernt ist als der hintere Abschnitt, und in welcher jedes Rad (4) von einem Radträger oder Lenkzapfen (17) getragen ist, der zwei Gelenke aufweist, die die Schwenkachse des Rades definieren, wobei eines dieser Gelenke mit dem Scheitel eines ersten Dreiecks, das das untere (16) genannt wird, und das andere mit dem Scheitel eines zweiten Dreiecks, das das obere (6) genannt wird, verbunden ist, dessen Längs-Anlenkachse im Inneren des Raumes gelegen ist, der von den genannten tragenden Bodenlängsträgern und ihrer Projektion auf den Boden gebildet ist, wobei diese beiden Dreiecke jeweils mit dem Aufbau durch eine Anlenkung mit einer im wesentlichen längsverlaufenden Achse längs ihrer Seite, die dem Gelenk gegenüberliegt, derart verbunden ist, daß der vertikale Durchfederungsweg des Rades gestattet und geführt ist,
dadurch gekennzeichnet, daß das obere Dreieck (6) von einem Querarm (6a), der im wesentlichen in der vertikalen Ebene (2) der Radachse gelegen ist, und einer im wesentlichen zum Arm (6a) senkrechten Verlängerung (6b) gebildet ist und sich längs der längsverlaufenden Anlenkachse (6c) des Dreiecks nach hinten erstreckt, und derart angeordnet ist, daß der genannte Querarm (6a) unter dem entsprechenden, tragenden Bodenlängsträger hindurchläuft und seinen Federweg durchführt.

2. Vorderradaufhängung nach Anspruch 1, dadurch gekennzeichnet, daß die Aufhängungsdreiecke (6, 16) an einer Wiege (B) angelenkt sind, die am Fahrzeugaufbau unter den Bodenlängsträgern durch elastische Abstützungen (7, 12) befestigt ist.

3. Vorderradaufhängung nach Anspruch 2, dadurch gekennzeichnet, daß die Wiege (B) von einem oberen Aufbau (8), an dem die oberen Dreiecke (6) angelenkt sind, und einem unteren Aufbau (9, 10) gebildet ist, an dem die unteren Dreiecke (16) angelenkt sind.

4. Vorderradaufhängung nach Anspruch 3, dadurch gekennzeichnet, daß der obere Aufbau eine U-förmige Traverse (8) und der untere Aufbau eine Traverse (9) und zwei kleine Längsträger (10) aufweist, wobei die obere und untere Traverse miteinander in der Mitte des Fahrzeugs verschweißt und mittels zweier vertikaler Säulen (11) an den Enden aneinander befestigt sind.

5. Vorderradaufhängung nach Anspruch 4, dadurch gekennzeichnet, daß jede Säule (11) eine Verlängerung (11a) aufweist, die sich zur Außenseite hin erstreckt und als Sitz für eine vordere, elastische Abstützung (7) dient, die im Inneren des L gelegen ist, das vom Arm (6a) und seiner Verlängerung (6b) gebildet ist.

6. Vorderradaufhängung nach Anspruch 4 oder Anspruch 5, dadurch gekennzeichnet, daß jeder kleine Längsträger (10) an der Hinterseite eine Verlängerung (11a) aufweist, die als Sitz für eine elastische, hintere Abstützung (12) dient.

7. Kraftfahrzeug mit einer Vorderradaufhängung nach irgendeinem der vorangehenden Ansprüche, dadurch gekennzeichnet, daß die elastischen vorderen Abstützungen (7) am tragenden Aufbau des Fahrzeugs unter dem Bodenlängsträger (1) vor der Verbindungszone (1c) und die elastischen hinteren Abstützungen (12) unter dem Bodenlängsträger (1) am hinteren Ende der Verbindungszone (1c) befestigt sind.

8. Kraftfahrzeug nach Anspruch 7, dadurch gekennzeichnet, daß die Anlenkachse des oberen Dreiecks (6) im wesentlichen parallel zur Richtung der Verbindungszone (1c) im Grundriß ist.
